# FASCICULE DE BREVET EUROPEEN

(11) **EP 1 107 902 B1**
(45) Date de publication et mention de la délivrance du brevet: **03.12.2003**
(21) Numéro de dépôt: 98942787.7
(22) Date de dépôt: 26.08.1998
(51) Int. Cl.: B62M 9/16

(54) **DISPOSITIF DE DERAILLAGE ARRIERE POUR VELO**
HINTERE GANGSCHALTUNG FÜR FAHRRAD
REAR CHANGER DEVICE FOR BICYCLE

(43) Date de publication de la demande: 20.06.2001
(73) Titulaire: SHIMANO INC., Osaka (JP)
(72) Inventeur: SAVARD, Franck, F-22400 Planguenoual (FR)
(74) Mandataire: Wallinger, Michael, Dr.-Ing.
(86) Numéro de dépôt international: FR9801854
(87) Numéro de publication internationale: WO00012379

(56) Documents cités:
- DE-A- 4 207 372
- FR-A- 994 334
- FR-A- 2 037 543
- FR-A- 2 703 020
- FR-A- 2 750 668
- FR-A- 2 759 968
- US-A- 4 637 808

## Description

La présente invention concerne un dispositif de déraillage arrière, optimisé, pour vélo, plus particulièrement mais non exclusivement adapté aux vélos comprenant également un dérailleur avant et un jeu de plateaux, l'ensemble étant commandé par une poignée de commande synchronisée.

On connaît par la demande de brevet européen No. 95450012.0, un agencement de deux dérailleurs avant et arrière qui sont commandés par une poignée unique.

Cet agencement est particulièrement intéressant du point de vue de la conduite pour l'utilisateur mais dans la présente demande, on retient un avantage particulier qui ne présente pas un intérêt direct pour l'utilisateur, à savoir la limitation de la longueur de chaîne.

En effet, du fait que le nombre de combinaisons de plateaux et de pignons dans la demande de brevet ci-dessus est réduit à un sous ensemble déterminé du total des combinaisons correspondant au produit du nombre de pignons par le nombre de plateaux et du fait que l'alignement de chaîne est optimisé, la longueur de chaîne est réduite.

De plus, le marché demande que la garde au sol soit améliorée notamment dans le cas de vélos de type tout terrain et l'on s'aperçoit que le dérailleur arrière est particulièrement exposé aux chocs et à l'accrochage, notamment quand il y a une grande longueur de chaîne à reprendre.

Le brevet français FR 2 750 688 révèle un dispositif de chaîne de traction dans la forme d'un dérailleur pour guider et tracter une chaîne de vélo. La dispositif de dérailleur connu comprend un bras rotatif muni d'un ressort de rappel pressant le bras dans le sens inverse des aiguilles d'une montre. De plus, des moyens mobiles de tension sont fixés aux moyens de guidage/déraillage.

Le dérailleur selon la présente invention présente les avantages suivants. Il propose un dérailleur dont la garde au sol est augmentée de façon notable, dont le fonctionnement ne perturbe pas la conception du cadre du vélo si bien qu'il peut être monté sur le parc existant sans modification, à condition qu'il y ait, de façon préférentielle, un moyen de limitation du croisement de chaîne pour diminuer la longueur de chaîne, dont la fabrication requiert des pièces immédiatement réalisables industriellement, dont le fonctionnement est identique pour l'utilisateur, dont la mise en service permet de conserver les jeux de pignons et de plateaux existant sur le vélo, et dont le coût reste dans la gamme des prix des dérailleurs du marché.

Le dispositif de déraillage adapté à un vélo équipé d'un dérailleur avant, d'une chaîne reliant un jeu de pignons et au moins un plateau, et de préférence d'une commande synchronisée est prévu pour limiter les combinaisons pour un alignement de chaîne adapté et pour réduire la longueur de chaîne nécessaire dans le cas de plusieurs plateaux. Le dispositif se compose de
- une embase mobile en rotation et munie d'un ressort de rappel sollicitant ladite embase dans le sens inverse des aiguilles d'une montre,
- des moyens de guidage/déraillage, solidaires de cette embase, et
- une platine mobile, de tension, solidaire des moyens de guidage/déraillage.

De plus, la platine mobile de tension comprend un bras support, un bras de tension, monté pivotant par rapport audit bras support et un premier et un second galets de tension, montés libres en rotation aux extrémités du bras de tension, ainsi qu'un ressort qui sollicite le bras de tension dans le sens inverse des aiguilles d'une montre, la chaîne passant sur le premier galet de tension et sous le second galet de tension.

Dans un mode particulier de réalisation, le bras de tension est monté sur un axe pivotant par rapport au bras support, et cet axe est disposé sensiblement au milieu dudit bras de tension ou suivant une variante, cet axe est confondu avec l'axe de rotation du second galet.

Selon une autre variante de réalisation, un galet de guidage/déraillage est monté pour être librement en rotation sur les moyens de guidage/déraillage entre l'embase et la platine mobile, la chaîne passant sur ce galet de guidage/déraillage.

Un perfectionnement prévoit que le galet de guidage/déraillage peut être est supporté par des moyens de réglage en translation dans le plan de la chaîne.

De plus, le galet de guidage/déraillage peut comprendre des moyens complémentaires de guidage latéral tel qu'au moins un flasque.

Dans une variante de réalisation particulièrement avantageuse tant pour la fabrication que pour le confort de l'utilisateur par une amélioration de la qualité des déraillages, il est prévu des moyens de liaison interposés entre la platine mobile de tension et les moyens de guidage/déraillage, en sorte d'assujettir les efforts de tension de chaîne et les efforts de rappel des moyens de guidage.

L'invention est maintenant décrite en regard des dessins annexés qui représentent un agencement suivant un mode préférentiel de réalisation, non limitatif, les différentes figures montrant:
- figure 1, une vue en élévation latérale du dérailleur arrière selon variante de réalisation, monté sur un vélo comportant un jeu de pignons auquel est affecté ledit dérailleur,
- figure 2, une vue schématique fonctionnelle du dérailleur dans une première position, faisant apparaître un jeu de plateaux avec son dérailleur avant,
- figure 3, une vue schématique fonctionnelle du dérailleur identique à celle de la figure 2 mais dans une seconde position,
- figure 4, une vue d'une variante de réalisation dans laquelle l'axe de rotation de la platine de tension est confondu avec l'axe de rotation d'un galet,
- figure 5, une vue en élévation latérale d'une variante de réalisation avec ressort de rappel de parallélogramme et de tension commun, dans le cas d'un bras basculant à deux galets, et
- figure 6, une vue selon une autre variante selon figure 4, avec ressort de rappel et de tension commun.

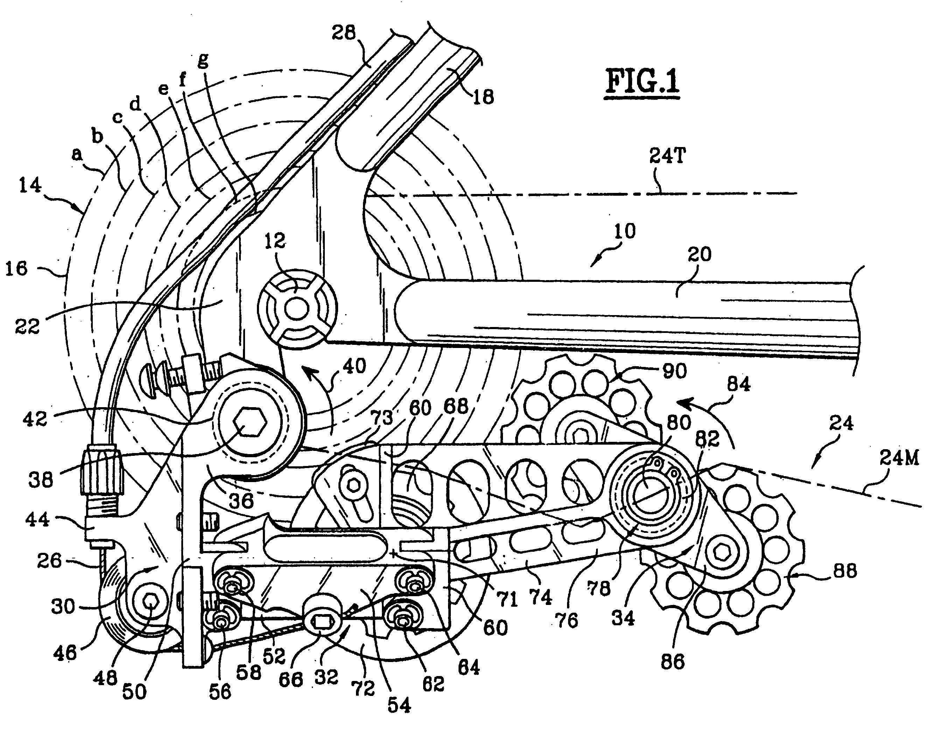

Sur la figure 1, on a représenté partiellement le cadre 10 d'un vélo avec l'axe 12 du moyeu de roue, équipé d'un jeu 14 de pignons 16, en l'occurrence 7 pignons a à g du plus grand au plus petit.

Le cadre 10 comprend de façon connue et non limitative, deux tubes 18 et 20 soudes ensemble, les deux tubes formant une plaque 22 de réception du dérailleur.

Une chaîne 24 relie le jeu 14 de pignons arrière aux plateaux avant, cette chaîne étant symbolisée par un trait mixte en sorte de conserver à la figure la clarté nécessaire.

Un câble de commande du dérailleur arrière est référencé 26 avec sa gaine 28, il est issu d'une commande de dérailleur, non représentée car cette commande n'intervient pas directement dans l'invention.

Le dérailleur comprend une embase 30, support de dérailleur, un moyen 32 de guidage/déraillage avec un parallélogramme déformable et une platine mobile de tension, en sorte de séparer les fonctions de guidage/déraillage et les fonctions de tension.

L'embase 30 comprend un corps 36, monté à rotation autour d'un axe 38, solidaire de la plaque 22 de réception du cadre 10. Ce corps est rappelé dans le sens de la flèche 40, c'est-à-dire le sens contraire de celui des dérailleurs de type connu, par un ressort symbolisé en 42.

Cette embase 30 est fixe en translation latérale Elle comprend, dans ce cas, une platine intermédiaire avec des moyens de réglage à butées représentées sur la figure 1 par des vis.

Sur cette embase, il est aussi prévu la butée 44 de la gaine 28.

Une poulie 46, montée libre en rotation autour d'un axe 48, parallèle à l'axe 38 de pivotement de l'embase, reçoit dans sa gorge le câble 26 pour en assurer un bon guidage.

Une aile 50, venue de fabrication avec l'embase s'étend sensiblement perpendiculairement au plan de ladite embase 30, et cette aile supporte le parallélogramme 32 déformable de guidage/déraillage.

Ce parallélogramme 32 comprend deux bras 52 et 54, inférieur et supérieur, articulés d'une part, par rapport à aile 50 de l'embase autour de deux axes 56 et 58 et d'autre part, par rapport à une pièce 60 de guidage, autour de deux axes 62 et 64. Un ancrage 66 permet la fixation du câble 26 sur le bras supérieur 54.

La pièce 60 de guidage est donc mobile en translation suivant une droite sensiblement parallèle à une génératrice du cône de révolution virtuel formé par le jeu de pignons, grâce au parallélogramme déformable, comme cela est le cas pour les dérailleurs connus.

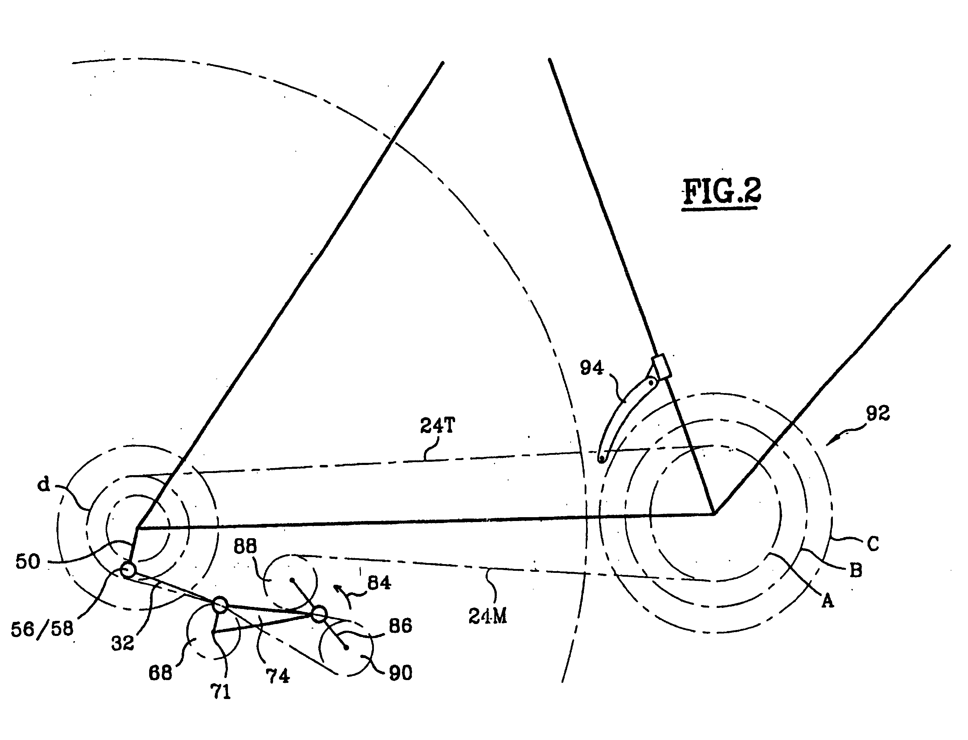

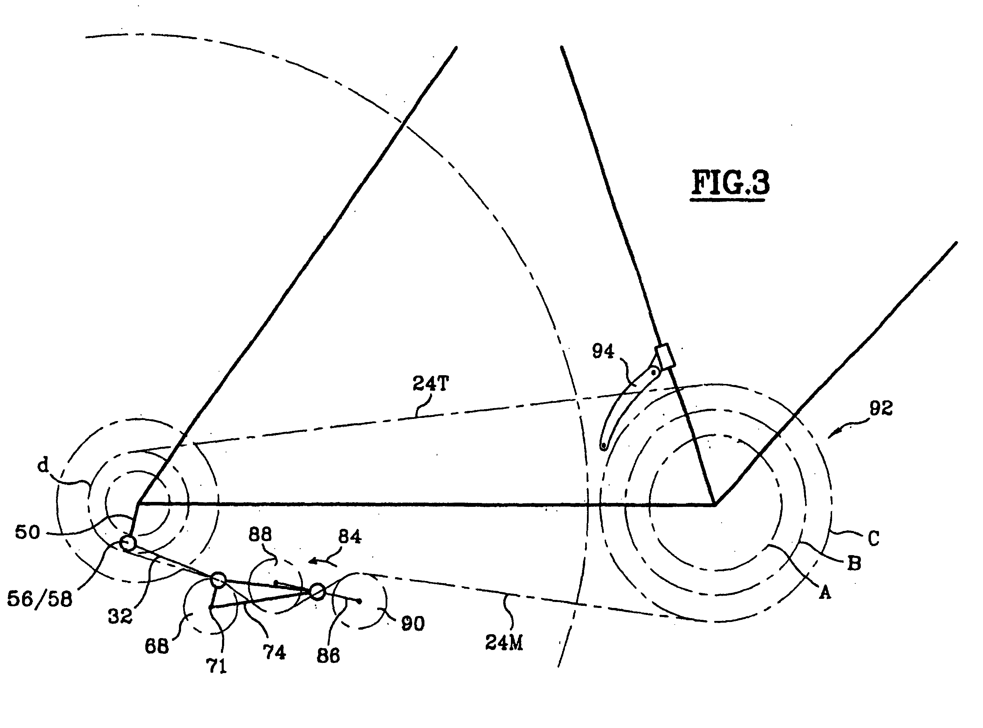

Cette pièce 60 de guidage comprend un galet 68 de guidage/déraillage monté libre à rotation autour d'un axe 71, visible uniquement sur les figures 2 et 3.

Un flasque 72, latéral, est associé à ce galet 68 de guidage/déraillage, centre sur le même axe 71, en sorte que le plan du flasque se trouve parallèle au plan du galet de guidage/déraillage.

L'ensemble du galet 68 de guidage/déraillage et de son flasque 72 est réglable en translation, dans le plan défini par la chaîne, par le pignon actif du jeu de pignons et par le plateau actif du jeu de plateaux, en sorte que l'ensemble puisse être disposé au plus près des pignons et surtout dans la meilleure position pour assurer un bon déraillage.

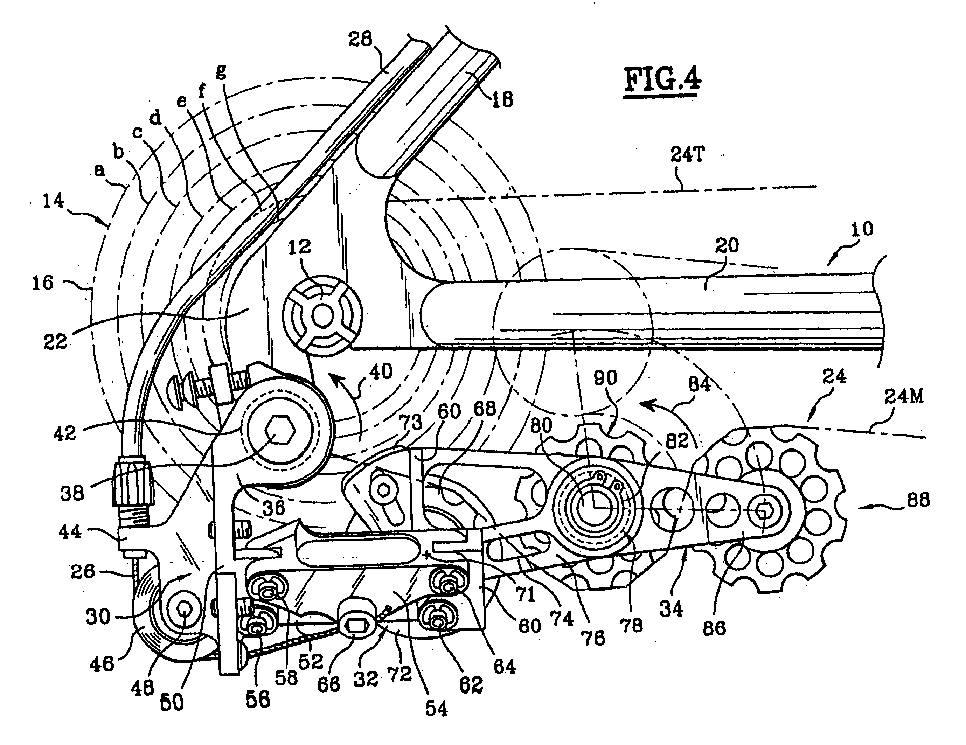

Sur les figures 1 et 4, un autre flasque de pression latéral de déraillage 73 est dispose sensiblement en vis a vis du flasque 72 du galet 68 de guidage/déraillage Ce flasque est réglable en position suivant une ligne reliant l'axe de rotation 12 à l'axe 71 de rotation du galet 68, pour coller au plus près du cône virtuel constitué par les pignons.

La pièce 60 de guidage se prolonge vers l'avant du vélo par un bras 74 support.

L'extrémité 76 de ce bras porte un palier 78 dans lequel tourne un axe 80 solidaire de la platine 34 mobile en rotation. Un ressort 82, représenté en trait discontinu, assure le rappel dans le sens de la flèche 84.

La platine 34 mobile de tension comprend un bras 86 de tension, qui est l'élément solidaire de l'axe 80. Le point de pivotement est sensiblement le milieu du bras dans le mode de réalisation présenté sur la figure 1. On note que ce bras 86 mobile a une longueur réduite par rapport à la longueur des différentes pièces comme le parallélogramme déformable ou le bras support.

A chacune des deux extrémités de ce bras 86 de tension, il est disposé un galet 88, 90 de tension, respectivement premier et second, monté libre en rotation.

On note le passage de la chaîne 24 sur le premier galet 88 de tension, sous le second galet 90 de tension, sur le galet 68 de guidage/déraillage, devant le flasque 72 de guidage, derrière le flasque 73 de pression latérale et sous le pignon correspondant du jeu 14 de pignons 16.

On a référencé pour la description du fonctionnement, respectivement 24T et 24M les brins tendu et mou de la chaîne 24.

Pour la description qui va suivre du fonctionnement du présent dérailleur il est nécessaire de se reporter aux figures 1, 2 et 3 toutes à la fois.

Il est bien précisé que seuls certains couples plateau/pignon sont préférentiellement accessibles en maintenant un alignement de chaîne optimal et que les combinaisons extrêmes comme: petit pignon g et petit plateau ou grand pignon a et grand plateau sont de préférence exclues pour une application du dispositif.

Sur la figure 2, la chaîne 24 est sur le petit plateau A des trois plateaux A, B et C du jeu de plateaux 92 avec son dérailleur avant référencé 94 et sur le quatrième pignon d. Cette position correspond sensiblement à la longueur la plus longue de chaîne à récupérer, puisque la combinaison plateau/pignon retenue correspond à la plus petite longueur périphérique parmi les combinaisons préférentiellement accessibles.

Dans cette position, le brin mou 24M de la chaîne est guidé par le galet 68 qui est plaqué sur la chaîne 24 car l'embase 30 est rappelée dans le sens de la flèche 40 par le ressort 42.

La galet 68 de guidage/déraillage est exactement dans le plan du pignon d correspondant.

La platine 34 mobile assure la tension et la reprise de la longueur de chaîne non utilisée. A cet effet, le bras 86 a pivoté dans le sens de la flèche 84, dans sa position extrême, le premier galet 88 étant en haut et le second galet 90 étant en bas. Le passage de chaîne est alors du type en S prononcé, ce qui correspond à un trajet de grande longueur.

On constate que la garde au sol est grande par rapport à un agencement selon l'art antérieur.

Sur la figure 3, grâce au dérailleur avant, l'utilisateur a amené la chaîne sur le plateau C de plus grand diamètre en combinaison avec le même pignon d, ce qui, pour le fonctionnement du mode représenté et pour les combinaisons retenues, correspond à la longueur de chaîne la plus petite à reprendre.

La bras 86 de tension est alors ramené, par une rotation inverse à celle engendrée par le ressort de rappel 82, dans une position dans laquelle le S est faiblement prononcé et couché, ce qui conduit à un tracé de chaîne quasiment linéaire.

On constate que le rattrapage est calculé pour la consommation de chaîne la plus grande et que dans cette position, on peut dire que le dérailleur n'engendre aucune consommation inutile de chaîne.

Dans cette configuration, la garde au sol est encore améliorée par rapport à la position précédente.

Ainsi dans toutes les positions, la garde au sol est améliorée et ceci de façon notable et le dérailleur se trouve positionné dans un espace qui est sensiblement celui qui correspond à l'encombrement des plateaux, cette garde au sol ne pouvant être diminuée.

Selon un autre variante de réalisation, il est aussi possible de prévoir une variante avec une simplification de l'agencement des ressorts de rappel.

En effet, il est généralement prévu un ressort de rappel interposé entre les deux bras 52 et 54 du parallélogramme déformable en sorte d'écarter le parallélogramme et conduire la chaîne du plus grand pignon a vers le plus petit g, ce ressort étant ensuite comprimé par l'effort exercé par l'utilisateur à travers le câble 26. Il se trouve que bien souvent, l'effort de rappel est insuffisant pour assurer un déraillage franc et efficace. De plus, l'effort à exercer sur le câble est important ce qui peut demander des démultiplications supplémentaires.

Aussi, dans le cas d'un autre variante de réalisation, il est possible de combiner les deux effets des ressorts de rappel du parallélogramme et de la platine mobile de tension pour diminuer les efforts respectifs engendrés tout en laissant à chacun d'eux la possibilité d'assurer des rappels efficaces.

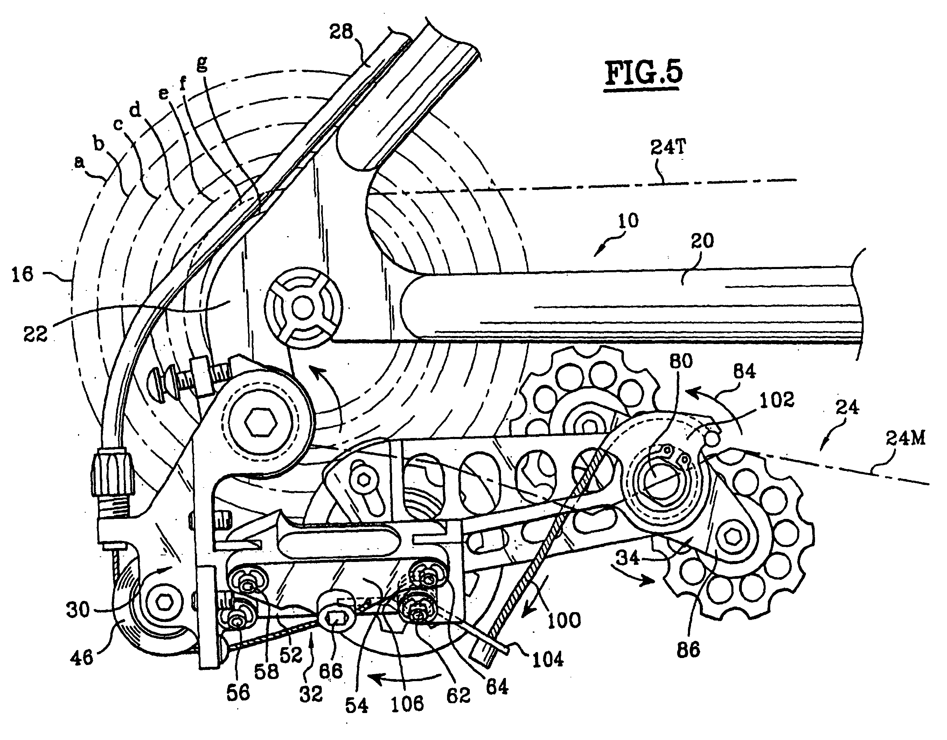

C'est ainsi que sur la figure 5 qui correspond au mode de réalisation de la figure 1 avec les mêmes références pour les éléments identiques, on a relié par un câble 100 un secteur 102 de poulie solidaire de l'axe 80 supportant le bras 34 de tension, avec l'une 104 des extrémités du ressort de rappel 106 du parallélogramme déformable des moyens de guidage/déraillage.

Le secteur 102 de poulie est agencé de sorte que le câble passe par dessus et assure une rotation dans le sens de la flèche 84 lorsqu'une traction est exercée que le câble 100.

Le ressort 106 est enroulé pour permettre une interaction entre l'effort résultant de la tension de chaîne et l'effort nécessaire au rappel du parallélogramme.

L'action de tension de chaîne est ainsi obtenue en totalité ou partiellement par la réaction du ressort 106 de rappel du parallélogramme. En effet, il est possible de supprimer le ressort de rappel 82, ou éventuellement de le garder dans certains cas mais en en modifiant la puissance qui doit être très limitée.

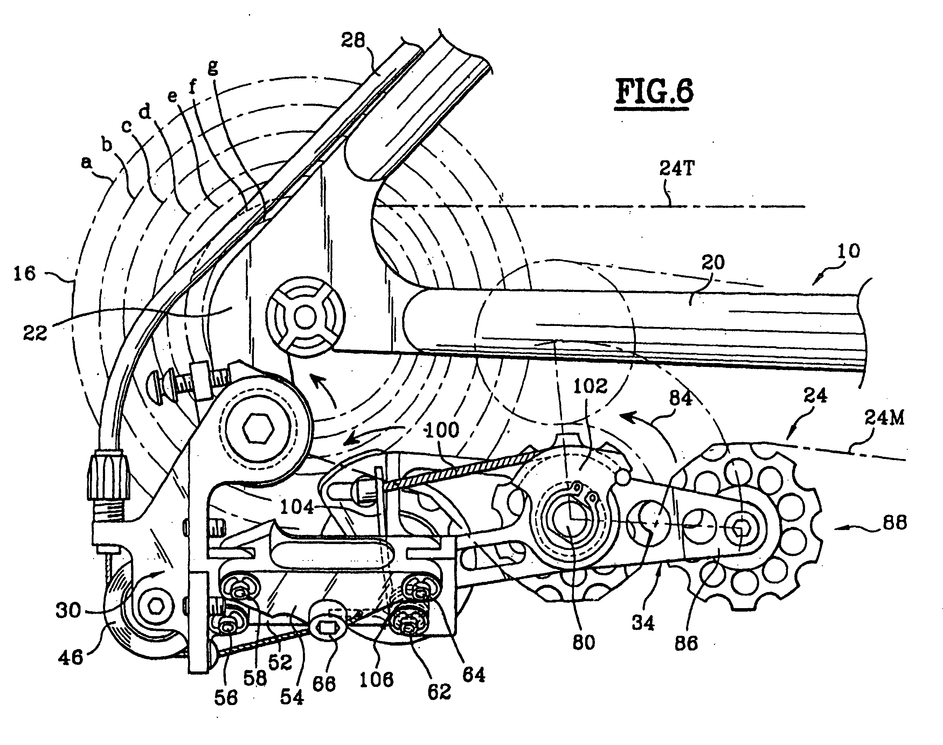

Il en est de même dans le cas représenté sur la figure 6, au sens d'enroulement près du ressort 106 de rappel. En effet, il faut prévoir un sens d'enroulement inversé si l'on veut obtenir l'action recherchée. Cette variante correspond au mode de réalisation de la figure 4.

Le montage de l'embase sur un axe de rotation avec un ressort de rappel est essentiellement prévu dans le mode de réalisation principal en sorte de permettre le démontage de la roue arrière, mais il est tout à fait possible de le prévoir fixe, notamment si le cadre comprend un monobras ou des moyens de démontage par l'arrière.

On peut aussi envisager de faire varier la position de l'axe 80 de rotation de la platine de tension et sur la figure 4, on constate que cet axe peut prendre une position extrême dans laquelle cet axe 80 est confondu avec l'axe de rotation du second galet 90.

On peut aussi remplacer le parallélogramme déformable indiqué dans le mode de réalisation principal par tout moyen adapté permettant le déplacement de la chaîne sensiblement parallèlement à une génératrice du cône virtuel déterminé par le jeu de pignons.

## Revendications

1. Dispositif de déraillage arrière pour un vélo équipé d'un dérailleur avant, d'une chaîne reliant un jeu (14) de pignons et un jeu (92) de plateaux, ledit dispositif comprend:
une embase (30), mobile en rotation et munie d'un ressort (42) de rappel sollicitant ladite embase dans le sens inverse des aiguilles d'une montre,
des moyens (32) de guidage/déraillage, solidaires de cette embase et incluant un parallélogramme déformable, et
une platine (34) mobile, de tension, solidaire des moyens (32) de guidage/déraillage,
**caractérisé en ce que** la platine (34) mobile de tension comprend un bras (74) support, un bras (86) de tension, monté pivotant par rapport audit bras (74) support et un premier (88) et un second (90) galets de tension, montés libres en rotation aux extrémités du bras (86) de tension, ainsi qu'un ressort (82) qui sollicite le bras (86) de tension dans le sens inverse des aiguilles d'une montre, la chaîne pouvant passer sur le premier galet de tension et sous le second galet de tension.

2. Dispositif de déraillage selon la revendication 1, **caractérisé en ce que** le bras (86) de tension est monté sur un axe pivotant (80) par rapport au bras (74) support, et cet axe est disposé sensiblement au milieu dudit bras de tension.

3. Dispositif de déraillage selon la revendication 1, **caractérisé en ce que** le bras (86) de tension est monté sur un axe pivotant (80) par rapport au bras (74) support, et **en ce que** cet axe est confondu avec l'axe de rotation du second galet (90).

4. Dispositif de déraillage selon l'une quelconque des revendications précédentes, **caractérisé en ce** un galet (68) de guidage/déraillage monté pour être librement en rotation sur les moyens de guidage/deraillage (38) entre l'embase (30) et la platine mobile (34), la chaîne pouvant passer sur ce galet de guidage/déraillage.

5. Dispositif de déraillage selon la revendication 4, **caractérisé en ce que** le galet (68) de guidage/déraillage est supporté par des moyens de réglage en translation dans le plan de la chaîne

6. Dispositif de déraillage selon la revendication 4 ou 5, **caractérisé en ce que** le galet (68) de guidage/déraillage comprend des moyens complémentaires de guidage/déraillage latéral tels qu'au moins un flasque (72).

7. Dispositif de déraillage selon la revendication 4 ou 5, **caractérisé en ce que** le galet (68) de guidage/déraillage comprend des moyens complémentaires de pression latérale tels qu'au moins un flasque (73) de pression latérale.

8. Dispositif de déraillage selon la revendication 7, **caractérisé en ce que** le flasque (73) de pression latérale est monté réglable en translation.

9. Dispositif de déraillage selon l'une quelconque des revendications précédentes, **caractérisé en ce qu'**il comprend des moyens (100) de liaison interposés entre la platine (34) mobile de tension et les moyens (32) de guidage/déraillage, en sorte de pouvoir assujettir les efforts de tension de chaîne et les efforts de rappel des moyens de guidage.

10. Dispositif de déraillage selon la revendication 10, **caractérisé en ce que** les moyens de liaison comprennent un câble (100) qui coopère d'une extrémité avec un secteur (102) de poulie fixé sur l'axe du bras (34) de tension et à l'autre extrémité et avec l'une (104) des extrémités d'un ressort (106) de rappel du parallélogramme déformable des moyens de guidage/déraillage (32).

## Claims

1. Rear derailleur device for a bicycle equipped with a front derailleur, a chain connecting a set (14) of pinions with a set (92) of disks, said device comprises:
- a rotatable base (30) provided with a return spring (42) forcing said base in the anti-clockwise direction,
- guiding/derailleur means (32) fixedly connected with said base and including a deformable parallelogram, and
- a movable tension plate (34) fixedly connected with the guiding/derailleur means (32).
**characterized in that** the movable tension plate (34) comprises a supporting arm (74), a tension arm (86) mounted to pivot relative to said supporting arm (74), and a first (88) and a second (90) tension roller mounted to freely rotate at the ends of the tension arm (86), as well as a spring (82) forcing the tension arm (86) in the anti-clockwise direction, the chain passing over the first tension roller and under the second tension roller.

2. Dérailleur device according to claim 1, **characterized in that** the tension arm (86) is mounted on an axis (80) pivoting relative to the supporting arm (74), and that said axis is disposed essentially in the centre of said tension arm.

3. Dérailleur device according to claim 1, **characterized in that** the tension arm (86) is mounted on an axis (80) pivoting relative to the supporting arm (74), and that said axis coincides with the rotation axis of the second roller (90).

4. Dérailleur device according to any one of the preceding claims, **characterized in that** a guiding/derailleur roller (68) mounted to be freely rotatable on the guiding/derailleur means (32) between the base (30) and the movable plate (34), the chain passing over said guiding/derailleur roller.

5. Dérailleur device according to claim 4, **characterized in that** the guiding/derailleur roller (68) is supported in the plane of the chain by translation adjustments means.

6. Dérailleur device according to claim 4 or 5, **characterized in that** the guiding/derailleur roller (68) comprises complementary lateral guiding/derailleur means such as at least one flange (72).

7. Dérailleur device according to claim 4 or 5, **characterized in that** the guiding/derailleur roller (68) comprises complementary lateral pression means such as at least one lateral pression flange (73).

8. Dérailleur device according to claim 7, **characterized in that** the lateral pression flange (73) is mounted translationally adjustable.

9. Dérailleur device according to any one of the preceding claims, **characterized in that** it comprises connection means (100) interposed between the movable tension plate (34) and the guiding/derailleur means (32) so as to restrain the tensional forces of the chain and the return forces of the guiding means.

10. Dérailleur device according to claim 10, **characterized in that** the connection means comprise a cable (100) which cooperates at one end with a roller sector (102) fixed to the axis of the tension arm (34) and at the other end and to one end of a return spring (106) of the deformable parallelogram of the guiding/dérailleur means (32).

## Patentansprüche

1. hintere Schaltvorrichtung für ein Fahrrad ausgestattet mit einem Umwerfer, einer Kette die einen Ritzelsatz (14) und einen Kettenblattsatz (14) verbindet, wobei diese Vorrichtung folgendes aufweist :
- eine rotationsbewegliche Einheit (30), ausgestattet mit einer Rückstellfeder (42) die eine gegen den Uhrzeigersinn gerichtete Kraft auf diese Einheit ausübt
- ein mit dieser Einheit fest verbundenes Führungs- / Umwerfmittle (32), mit einem verformbaren Parallelogramm, und
eine bewegliche Spannplatte (34), mit dem Führungs / Umwerfmittel (32) fest verbunden,
**dadurch gekennzeichnet, dass** die bewegliche Spannplatte (34) einen Stützarm (74), einen Spannarm (86), der drehbar um den Ausleger (74) montiert ist, und eine erste (88) und eine zweite (90) Spannrolle, die frei drehbar auf den Enden von dem Spannarm (86) montiert sind, so wie eine Feder (82) die den Spannarm (86) gegen den Uhrzeigersinn zwingt, wobei die Kette auf der erste Spannrolle und unter der zweiten Spannrolle geführt wird, aufweist.

2. Schaltvorrichtung nach Anspruch 1, **dadurch gekennzeichnet, dass** der Spannarm (86) auf einem beweglichen Achse (80) um den Stützarm (74) montiert ist, und diese Achse im wesentlichen in der Mitte dieses Spannarms angeordnet ist.

3. Schaltvorrichtung nach Anspruch 1, **dadurch gekennzeichnet, dass** der Spannarm (86) auf einer Achse (80), die um den Stützarm (74) schwenkbar montiert ist und dadurch dass diese Achse mit der Rotationsachse der zweiten Rolle (90) übereinstimmt.

4. Schaltvorrichtung nach einem der vorhergehenden Ansprüche, **dadurch gekennzeichnet, dass** eine Führungs- / Umwerfrolle (68) frei auf der Führungs- /Umwerfeinheit (32) drehbar, zwischen Einheit (30) und Spannplatte (34) angeordnet, wobei sie über die Führungs- / Umwerfrolle verlaufen kann.

5. Schaltvorrichtung nach Anspruch 4 **dadurch gekennzeichnet, dass** die Führungs- /Umwerfrolle (68) durch in der Übersetzung veränderbare Einrichtungen in der Ebene der Kette gestützt wird.

6. Schaltvorrichtung nach Anspruch 4 oder 5, **dadurch gekennzeichnet, dass** die Führungs- / Umwerfrolle (68) zusätzliche seitliche Führungs/Umwerfeinrichtungen wie zum Beispiel mindestens ein Lager (72) aufweist.

7. Schaltvorrichtung nach Anspruch 4 oder 5, **dadurch gekennzeichnet, dass** die Führungs- / Umwerfrolle (68) zusätzliche Einrichtungen für seitlichen Druck aufweist, wie z.B. mindestens ein seitliches Drucklager (73).

8. Schaltvorrichtung nach Anspruch 7 **dadurch gekennzeichnet, dass** das seitliche Drucklager (73) in translation einstellbar angebracht ist.

9. Schaltvorrichtung nach einem der vorgehenden Ansprüche, **dadurch gekennzeichnet, dass** sie Verbindungsmittel (100) aufweist, die zwischen der Spannplatte (34) und der Führungs / Umwerfeinheit (32) angebracht sind um die Spannungskräfte der Kette und die Rückstellkräfte der Führungseinrichtungen abfangen zu können.

10. Schaltvorrichtung nach Anspruch 10, **dadurch gekennzeichnet, dass** die Verbindungsmittel (100) ein Kabel aufweisen, das an einem Ende mit einem Rollensektor (102), der auf der Achse der Spannplatte (34) angebracht ist, und am anderen Ende mit einer von den Enden einer Rückstellfeder (106) des verformbaren Parallelogramms der Führungs- / Umwerfeinheit (32).
